# EUROPÄISCHE PATENTSCHRIFT

(11) **EP 0 582 947 B1**
(45) Veröffentlichungstag und Bekanntmachung des Hinweises auf die Patenterteilung: **20.11.1996**
(21) Anmeldenummer: 93112450.7
(22) Anmeldetag: 04.08.1993
(51) Int. Cl.: G01L 5/10, G01L 5/04

(54) **Einrichtung zum Messen der Bahnspannung**
Device for measuring tension in a web
Dispositif de mesure de la tension dans une bande

(30) Priorität: 13.08.1992 DE 4226791
(43) Veröffentlichungstag der Anmeldung: 16.02.1994
(73) Patentinhaber: KOENIG & BAUER-ALBERT AKTIENGESELLSCHAFT, 97080 Würzburg (DE)
(72) Erfinder: Kübert, Thomas, D-97553 Karlstadt-Karlburg (DE); Glöckner, Erhard, D-97246-Eibelstadt (DE)

(56) Entgegenhaltungen:
- US-A- 2 923 150
- US-A- 3 845 434
- US-A- 3 950 988

## Beschreibung

Die Erfindung betrifft eine Einrichtung zum Messen der Bahnspannung entsprechend dem Oberbegriff des Patentanspruches 1.

Die gattungsgemäße US-PS 38 45 434 zeigt eine Vorrichtung zum Messen einer Spannung einer sich bewegenden Warenbahn. Hierzu ist ein Druckluft beaufschlagtes Rohr mit einer Mehrzahl von Blasluftdüsen vorgesehen, das sich quer zur Laufrichtung der Warenbahn erstreckt. Durch die Blasluftdüsen tritt Druckluft zwischen Warenbahn und Mantel des Rohres und bildet so ein Luftpolster zwischen ihnen und verformt die Geometrie des Querschnittes des Rohres. Das Maß der Verformung wird gemessen und als Maß für die Warenbahnspannung ausgewertet.

Nach der US-PS 39 50 988 ist ein mittig gelagerter schwenkbarer Träger mit zwei Rollen vorgesehen, wobei die Bahn oberhalb der einen und unterhalb der anderen Rolle läuft. Die Schwenkmomente auf dem Träger sind ein Maß für die Bahnspannung.

Nach der DE-PS 11 87 096 ist eine Vorrichtung zur Messung und Regelung der Zugspannung von über Walzen laufenden Papierbahnen bekannt, mit einem quer zur Laufrichtung der Bahn angeordneten, mit Düsen oder Bohrungen versehenen Teil, der mit einem Druckluftbehälter über ein Drosselventil in Verbindung steht, wobei die Größe des Druckes im rohrförmigen Teil ein Maß für die jeweilige Bahnspannung ist, derart, daß das die Düsen oder Bohrungen enthaltende Teil als Drehzylinder ausgebildet ist, der mit Bahngeschwindigkeit umläuft und am Mantel gleichmäßig verteilt eine Anzahl von Bohrungen aufweist, von denen nur die im Aufliegebereich der Bahn zur Wirkung kommen. Nachteilig bei dieser Vorrichtung ist, daß durch die Richtungsänderung der zu messenden Papierbahn infolge der ganz oder zumindest teilweisen Umschlingung des drehenden Meßzylinders Dubliererscheinungen auftreten zwischen den einzelnen Druckeinheiten.

Der Erfindung liegt die Aufgabe zugrunde, eine berührungslos messende Einrichtung für die Bahnspannung mit hoher Meßgenauigkeit bei geringer Auslenkung der Papierbahn von der Bahntransportrichtung zu schaffen.

Diese Aufgabe wird erfindungsgemäß durch das Kennzeichen des Patentanspruches 1 gelöst. Bei der Anwendung der Erfindung entstehen insbesondere folgende Vorteile. Infolge minimaler Auslenkung der Papierbahn wird eine hohe Registergenauigkeit bei der Messung der Bahnspannung erzielt. Durch eine berührungslose Messung kann ein Abschmieren der frisch bedruckten Papierbahn vermieden werden. Eine hohe Meßgenauigkeit wird durch die Anordnung von zwei Wägezellen erzielt. Durch den Einsatz der erfindungsgemäßen Einrichtung wird eine Laufberuhigung der Papierbahn geschaffen, was Dubliererscheinungen vermeiden hilft. Diese Meßeinrichtung kann außerdem vorteilhaft dazu verwendet werden, über einen Rechner im Soll-Ist-Vergleich Regelfunktionen oder Sicherheitsfunktionen selbsttätig durchzuführen. Eine Sicherheitsfunktion kann beispielsweise bei Papierwicklern oder Papierbahnbruch durchgeführt werden. Die Einrichtung kann bei Akzidenzmaschinen, Zeitungs- und Telefonbuchmaschinen oder auch bei Flexodruckmaschinen eingesetzt werden.

Die Erfindung soll nachfolgend an einem Ausführungsbeispiel näher erläutert werden. In den beiliegenden Zeichnungen zeigen
- Fig. 1: die schematische Seitenansicht einer Rollenrotationsdruckmaschine mit der erfindungsgemäßen Einrichtung;
- Fig. 2: den Schnitt II - II nach Fig. 3;
- Fig. 3: die Draufsicht auf eine erfindungsgemäße Einrichtung;
- Fig. 4: eine elektrische Auswerteschaltung zur Dehnungsmessung in den Halterungen;
- Fig. 5: die schematische Seitenansicht einer vereinfachten Darstellung einer Rollen-Offsetmaschine mit der erfindungsgemäßen Einrichtung;
- Fig. 6: eine Darstellung entsprechend Fig. 5, jedoch mit Einsatz in einer Flexodruckmaschine;
- Fig. 7: Einsatz in einer Flexodruckmaschine, eine Detaildarstellung nach Fig. 5.

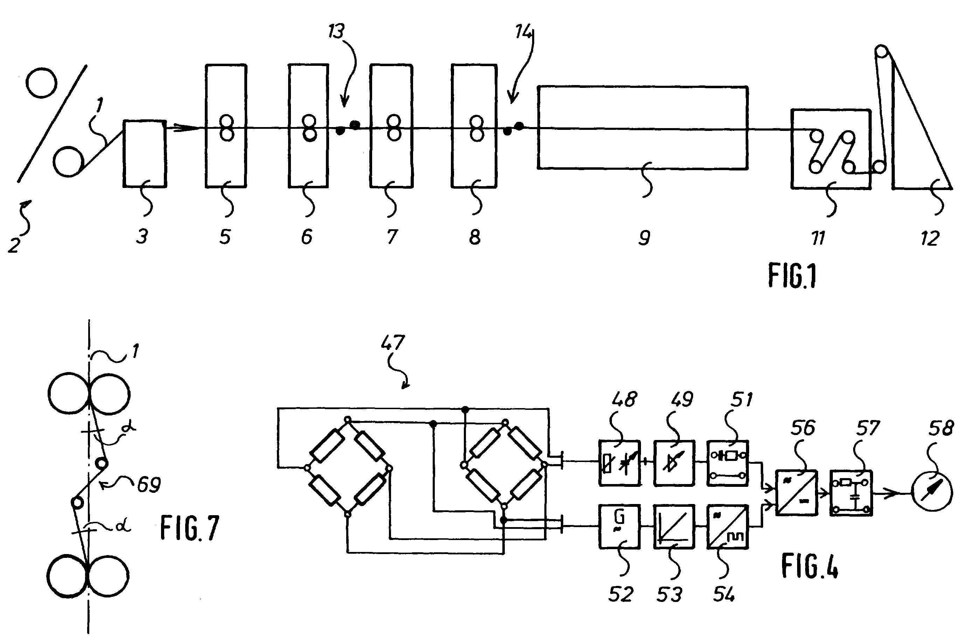

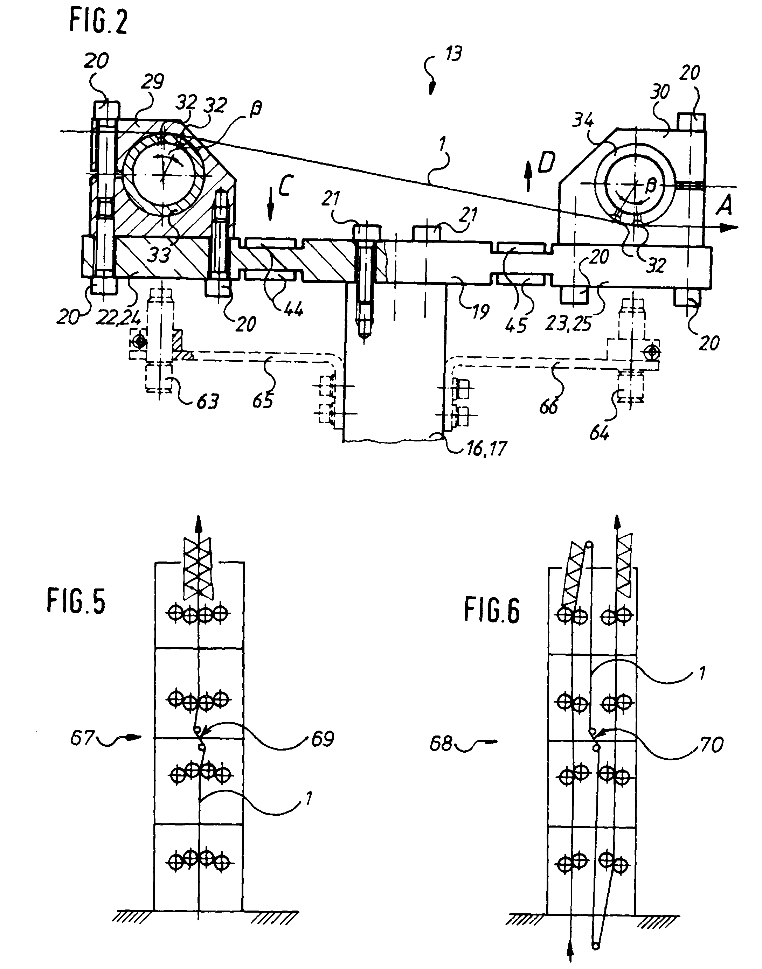

Entsprechend Fig. 1 wird eine Seitenansicht einer Rollenrotationsdruckmaschine für Akzidenzdruck in schematischer Darstellung gezeigt. Eine Papierbahn 1, vom Rollenwechsler 2 kommend, durchläuft ein Einzugswerk 3, die Druckeinheiten 5; 6; 7; 8, einen Trockenofen 9 und über eine Kühlstrecke 11 zu einem Falzapparat 12, und läuft von dort aus in bekannter Art und Weise weiter. Zwischen den Druckeinheiten 6 und 7 und vor dem Trockenofen 9 ist jeweils eine erfindungsgemäße Meßeinrichtung 13; 14 angeordnet, die in den Fig. 2 und 3 in einem Schnitt bzw. in einer Draufsicht näher dargestellt und nachfolgend beschrieben wird. Stellvertretend für alle gleich ausgeführten Meßeinrichtungen wird die Meßeinrichtung 13 beschrieben.

Auf gestellfesten Stützen 16; 17 sind jeweils mittig, zueinander parallel verlaufende Tragarme 18; 19 mittels Schrauben 21 befestigt. Die freien Enden 22; 23; 24; 25 der Tragarme 18; 19 nehmen über Klemmhalter 27; 28; 29; 30 achsparallel zu den Walzen der Druckeinheiten 5 bis 8 verlaufende, mit Düsenöffnungen oder Bohrungen 32 versehene Rohre 33; 34 auf. Die Bohrungen 32 verlaufen doppelreihig in axialer Richtung der Rohre 33; 34 und sind nur an den Kontaktflächen angeordnet, die zwischen der Papierbahn 1 und den Rohren 33; 34 bestehen. Die Kontaktflächen am Umfang der Rohre 33; 34 entsprechen einem Winkel β von ca. 25°. Die Rohre 33; 34 sind in den Klemmhaltern 27 bis 30 mittels Schrauben 20 festgeklemmt Die Rohre 33; 34 sind jeweils an einem ihrer Enden fest verschlossen und an ihrem anderen Ende über einen Schlauch 36; 37 mit einer T-förmigen Luftzuführung 38 verbunden. Die Luftzuführung 38 ist über ein nicht dargestelltes Ventil mit einer in der Maschine befindlichen Blasluftanlage verbunden. Die Schläuche 36; 37 sind an ihren Verbindungsstellen mittels Schlauchbändern 39 gesichert. Die Luftzuführung 38 ist über eine Halterung 41 mit der Stütze 16 verbunden. Es ist auch möglich, den Rohren 33; 34 von beiden Enden her Luft zuzuführen, d. h. die Schläuche 36; 37 sowie die T-förmige Luftzuführung 38 müßten dann zweimal angeordnet werden.

Die Tragarme 18; 19 weisen jeweils zwischen der mittigen Befestigung 21 und den an den freien Enden 22 bis 25 angeordneten Klemmhaltern 27 bis 30 Dehnungsmeßstreifen 42 bis 45 auf. Infolge der Spannung der Papierbahn 1 werden die Tragarme 18; 19 geringfügig in Pfeilrichtung C bzw. D gebogen, so daß die Dehnungsmeßstreifen 42 bis 45 ansprechen.

Eine den Dehnungsmeßstreifen 42 bis 45 zugeordnete Auswerteschaltung ist in Fig. 4 dargestellt. Dabei handelt es sich um eine bekannte Doppelbrückenschaltung 47, deren Widerstände den Dehnungsmeßstreifen 42 bis 44 entsprechen. Die Ausgänge der Doppelbrückenschaltung 47 sind über einen RC-Abgleich 48, einen Verstärker 49, einen Bandpaß 51, bzw. einen Frequenzgenerator 52, einen 90^{o}-Phasenschieber 53 und einen Sinus-Rechteckwandler 54 mit einem phasenrichtigen Demodulator 56 und über einen Tiefpaß 57 mit einem Anzeigegerät 58 verbunden. Die Elemente 48 bis 57 befinden sich außerhalb der Meßeinrichtung 13, z. B. in einem nicht dargestellten Gehäuse. Das Anzeigegerät 58 kann z. B. im Maschinenleitstand oder an einer anderen zentralen Stelle angeordnet sein.

Entsprechend der gestrichelten Darstellung in Fig. 2 ist eine Ausführungsvariante bezüglich der Anordnung von Wägezellen gezeigt. Hierbei sind induktive Wegaufnehmer 61 bis 64 in einem definierten Abstand von den Enden 22 bis 25 der Tragarme 18; 19 auf Halterungen 65; 66 angeordnet, die mit den gestellfesten Stützen 16; 17 kraftschlüssig verbunden sind. Die Wegaufnehmer 61 bis 64 werden an bekannte, nicht dargestellte Trägerfrequenz-Meßverstärker angeschlossen und dort durch Präzisionswiderstände zu einer Wheatstone'schen Brücke ergänzt. Durch die Tauchankerverschiebung wird die vorher abgeglichene Brücke verstimmt. Das von den Wegaufnehmern 61 bis 64 erzeugte Meßsignal ist proportional der Ankerverschiebung und somit ein Maß für den Weg der mit dem Tauchanker korrespondierenden Tragarme 18; 19. Nach Verstärkung erhält man eine vorzeichen- und amplitudengerechte, an einem Anzeigegerät analog der nach Position 58 gezeigten ablesbaren Aussage über die zu messende Auslenkung infolge der Bahnspannung. Dabei wird ein Mittelwert als Gesamtwert gebildet. Die Bedienperson kann somit geeignete Maßnahmen einleiten, wie z. B. die Bahnspannung mittels der Zugwalzen korrigieren. Dies könnte auch automatisch durch eine Regelung geschehen, über einen nicht dargestellten Rechner im Maschinenleitstand.

In Fig. 5 und 6 ist jeweils eine schematische Seitenansicht einer Rollenoffsetmaschine 67 für Zeitungsdruck- bzw. eine Flexodruckmaschine 68 als Anwendungsfall für die Anordnung einer erfindungsgemäßen Meßeinrichtung 69; 70 gezeigt.

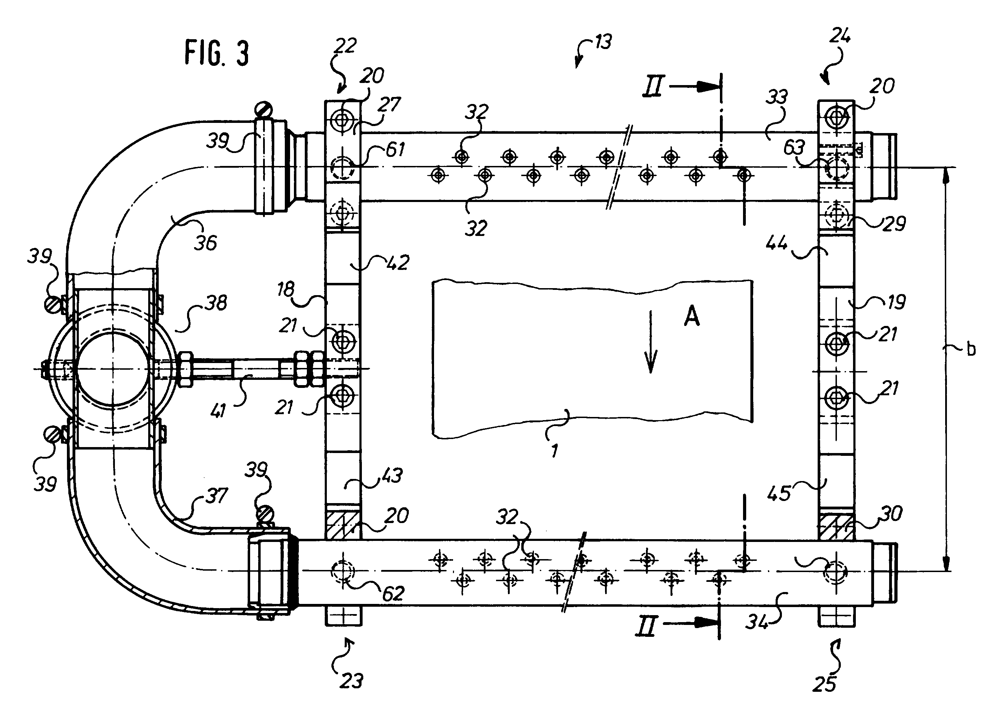

Dabei ist in Fig. 7 dargestellt, daß die Papierbahn 1 beim Umlaufen der Meßeinrichtung 67 in einem Winkel α zur Senkrechten ausgelenkt wird. Dieser Winkel α beträgt ca. 6°. Dies trifft sinngemäß auch für die Auslenkung der Papierbahn an den anderen genannten Meßeinrichtungen 13; 14; 70 zu.

Der Abstand b der beiden Rohre 33; 34 voneinander ist so bemessen, daß er unterhalb der Eigenfrequenz der Papierbahn 1 sowie unterhalb der Eigenfrequenz der Meßeinrichtung 13; 14; 69; 70 liegt.

### Teileliste

- 1: Papierbahn
- 2: Rollenwechsler
- 3: Einzugswerk
- 4: -
- 5:
- 6: Druckeinheit
- 7: Druckeinheit
- 8: Druckeinheit
- 9: Trockenofen
- 10: -
- 11: Kühlstrecke
- 12: Falzapparat
- 13: Meßeinrichtung
- 14: Meßeinrichtung
- 15: -
- 16: Stütze (13)
- 17: Stütze (13)
- 18: Tragarm (13)
- 19: Tragarm (13)
- 20: Schraube
- 21: Schraube
- 22: Ende (19)
- 23: Ende (19)
- 24: Ende (18)
- 25: Ende (18)
- 26: -
- 27: Klemmhalter
- 28: Klemmhalter
- 29: Klemmhalter
- 30: Klemmhalter
- 31: -
- 32: Düse / Bohrung (33; 34)
- 33: Rohr
- 34: Rohr
- 35: -
- 36: Schlauch
- 37: Schlauch
- 38: Luftzuführung
- 39: Schlauchband
- 40: -
- 41: Halterung
- 42: Dehnungsmeßstreifen
- 43: Dehnungsmeßstreifen
- 44: Dehnungsmeßstreifen
- 45: Dehnungsmeßstreifen
- 46: -
- 47: Doppelbrückenschaltung
- 48: RC-Abgleich
- 49: Verstärker
- 50: -
- 51: Bandpaß
- 52: Frequenzgenerator
- 53: Phasenschieber 90°
- 54: Sinus-Rechteckwandler
- 55: -
- 56: Demodulator, phasenrichtig
- 57: Tiefpaß
- 58: Anzeigegerät
- 59: -
- 60: -
- 61: Wegaufnehmer, induktiv
- 62: Wegaufnehmer, induktiv
- 63: Wegaufnehmer, induktiv
- 64: Wegaufnehmer, induktiv
- 65: Halterung
- 66: Halterung
- 67: Rollenoffsetmaschine
- 68: Flexodruckmaschine
- 69: Meßeinrichtung
- 70: Meßeinrichtung
- A: Transportrichtung (1)
- C: Verbiegerichtung
- D: Verbiegerichtung
- b: Abstand (33; 34)
- α: Winkel
- β: Winkel

## Patentansprüche

1. Einrichtung zum Messen der Bahnspannung, insbesondere für Papierbahnen in Rollenrotationsdruckmaschinen, wobei zwei voneinander beabstandete, mit Blasluftdüsen (32) versehene mit einer Blasluftanlage verbundene und rechtwinklig zur Bahnlaufrichtung verlaufende Rohre (33; 34) auf den freien Enden (22; 23; 24; 25) zweier mittig und gestellfest gelagerter Tragarme (18; 19) angeordnet sind und zwischen den freien Enden (22; 23; 24; 25) der Tragarme (18; 19) der Rohre (33; 34) und der mittigen Lagerung (21; 16; 17) der Tragarme (18; 19) jeweils eine Biegung messende Elemente (42; 43; 44; 45; 61; 62; 63; 64) vorgesehen sind und im Betrieb eine Papierbahn (1) beide Rohre (33; 34) in Bahnlaufrichtung (A) wechselweise oben und unten in einem Umschlingungswinkel (β) umschlingt, durch Bildung eines Luftpolsters zwischen den Düsen (32) und der Bahn jedoch nicht berührt, wobei der Betrag der Biegung (C; D) der Enden (22; 23; 24; 25) der Tragarme (18; 19) auswertbar und als proportionaler Wert der Papierbahnspannung auswertbar ist.

2. Einrichtung nach Anspruch 1, dadurch gekennzeichnet, daß zwischen den Düsen (32) der Rohre (33; 34) ein Luftpolster angeordnet ist.

3. Einrichtung nach Anspruch 1 und 2, dadurch gekennzeichnet, daß die Rohre (33; 34) über Leitungen (36; 37) und Ventile mit einer Blasluftanlage verbunden sind.

4. Einrichtung nach Anspruch 1 bis 3, dadurch gekennzeichnet, daß die eine Biegung messenden Elemente (42; 43; 44; 45) aus Dehnungsmeßstreifen bestehen, die zwischen der mittigen Befestigung (21; 16; 17) und den Enden (22; 23; 24; 25) der Tragarme (18; 19) angeordnet sind.

5. Einrichtung nach Anspruch 1 bis 3, dadurch gekennzeichnet, daß die eine Biegung messenden Elemente (61; 62; 63; 64) aus induktiven Wegaufnehmern bestehen, die gestellfest in einem definierten Abstand zu den Tragarmen (18; 19) angeordnet sind.

6. Einrichtung nach Anspruch 1 bis 5, dadurch gekennzeichnet, daß der Umschlingungswinkel (β) der Papierbahn (1) um die Rohre (33; 34) 20 bis 30^{o} beträgt.

## Claims

1. A device for measuring tension in a web, in particular for paper webs in web-fed rotary printing machines, wherein two mutually spaced pipes (33; 34) are provided with blowing air nozzles (32), are connected to a blowing air arrangement and run at right angles to the moving direction of the web, are arranged on the free ends (22; 23; 24; 25) of two supporting arms (18; 19) which are mounted centrally and secured to the frame, and a respective element (42; 43; 44; 45; 61; 62; 63; 64) which measures bending is provided between the free ends (22; 23; 24; 25) of the supporting arms (18; 19) of the pipes (33; 34) and the central mounting (21; 16; 17) of the supporting arms (18; 19), and during operation a paper web (1) passes over both pipes (33; 34) in the moving direction of the web (A), alternately above and below at an angle of wrap (β), but does not come into contact with said pipes (33; 34) due to the formation of an air cushion between the nozzles (32) and the web, and wherein it is possible to evaluate the extent of bending (C; D) of the ends (22; 23; 24; 25) of the supporting arms (18; 19) and to evaluate said bending (C; D) as a proportional value of the paper web tension.

2. A device according to Claim 1, characterized,in that an air cushion is arranged between the nozzles (32) of the pipes (33; 34).

3. A device according to Claims 1 and 2, characterized in that the pipes (33; 34) are connected to a blowing air arrangement by way of lines (36; 37) and valves.

4. A device according to Claims 1 to 3, characterized in that the elements (42; 43; 44; 45) which measure bending comprise strain-measuring strips which are arranged between the central attachment (21; 16; 17) and the ends (22; 23; 24; 25) of the supporting arms (18; 19).

5. A device according to Claims 1 to 3, characterized in that the elements (61; 62; 63; 64) which measure bending comprise inductive distance sensors which are arranged secured to the frame at a defined spacing from the supporting arms (18; 19).

6. A device according to Claims 1 to 5, characterized in that the angle of wrap (β) of the paper web (1) around the pipes (33; 34) is 20 to 30°.

## Revendications

1. Dispositif de mesure de la tension dans une bande, en particulier pour des bandes de papier dans des presses rotatives à bobines, deux tubes (33 ; 34) distants l'un de l'autre, pourvus de buses de soufflage d'air (32), reliés à une unité d'air de soufflage et s'étendant à angle droit par rapport à la direction de défilement de la bande étant disposés sur les extrémités libres (22 ; 23 ; 24 ; 25) de deux bras porteurs (18 ; 19) montés en position centrale et solidaires du bâti, et des éléments (42 ; 43 ; 44 ; 45 ; 61 ; 62 ; 63 ; 64) mesurant chacun une flexion étant prévus entre les extrémités libres (22 ; 23 ; 24 ; 25) des bras porteurs (18 ; 19) des tubes (33 ; 34) et le support central (21 ; 16 ; 17) des bras porteurs (18 ; 19) et, lors du fonctionnement, une bande de papier (1) entourant les deux tubes (33 ; 34) dans la direction de défilement (A) de la bande en passant alternativement au-dessus et au-dessous avec un angle d'enroulement (β) et en formant un coussin d'air entre les buses (32) et la bande, mais sans toucher celle-ci, le degré de flexion (C ; D) des extrémités (22 ; 23 ; 24 ; 25) des bras porteurs (18 ; 19) pouvant être analysé et exploité en tant que valeur proportionnelle à la tension de la bande de papier.

2. Dispositif selon la revendication 1, caractérisé en ce qu'un coussin d'air est prévu entre les buses (32) des tubes (33 ; 34).

3. Dispositif selon la revendication 1 ou 2, caractérisé en ce que les tubes (33 ; 34) sont reliés par des conduites (36 ; 37) et des valves à une unité d'air de soufflage.

4. Dispositif selon les revendications 1 à 3, caractérisé en ce que les éléments (42 ; 43 ; 44 ; 45) mesurant une flexion sont constitués de jauges extensométriques implantées entre la fixation centrale (21 ; 16 ; 17) et les extrémités (22 ; 23 ; 24 ; 25) des bras porteurs (18 ; 19).

5. Dispositif selon les revendications 1 à 3, caractérisé en ce que les éléments (61 ; 62 ; 63 ; 64) mesurant une flexion sont constitués de capteurs inductifs de déplacement qui sont solidaires du boîtier et disposés à une distance définie des bras porteurs (18 ; 19).

6. Dispositif selon les revendications 1 à 5, caractérisé en ce que l'angle d'enroulement (β) de la bande de papier (1) autour des tubes (33 ; 34) est compris entre 20 à 30°.
